# EUROPEAN PATENT APPLICATION

(11) **EP 4 778 765 A1**
(43) Date of publication of application: **22.07.2026**
(21) Application number: 26150262.9
(22) Date of filing: 05.01.2026
(51) Int. Cl.: B60K 35/29, B60K 35/10, B60K 35/22, B60K 35/28, B60K 35/60, B60K 35/81

(54) **IN-VEHICLE SYSTEM AND INFORMATION PROCESSING APPARATUS**

(30) Priority: 21.01.2025 JP 2025008568
(71) Applicant: Toyota Jidosha Kabushiki Kaisha, Toyota-shi, Aichi-ken 471-8571 (JP)
(72) Inventor: TANIZAWA, Tatsuya, Toyota-shi, Aichi-ken, 471-8571 (JP); SHIN, Akinori, Toyota-shi, Aichi-ken, 471-8571 (JP); TODAKA, Junichi, Toyota-shi, Aichi-ken, 471-8571 (JP); NAKANISHI, Kyosuke, Toyota-shi, Aichi-ken, 471-8571 (JP); HASEGAWA, Hideo, Toyota-shi, Aichi-ken, 471-8571 (JP); TANAKA, Seiichi, Toyota-shi, Aichi-ken, 471-8571 (JP)
(74) Representative: Simmons & Simmons

(57) **Abstract**

An information processing apparatus (10) for controlling a plurality of displays (21, 22, 23, 24) having a first display (21, 24) and a second display (22, 23) includes a controller (100) configured to execute outputting, in response to the start of driving of a vehicle (1), information to display, on the second display (22, 23), first content displayed on the first display (21, 24) while the vehicle (1) is stopped.

## Description

### BACKGROUND

### Technical Field

The present disclosure relates to an in-vehicle system and an information processing apparatus.

### Description of the Related Art

It is known that touch operations on a meter display in a vehicle are more restricted when the vehicle is driving than when it is stopped (see, for example, Patent Literature 1).

### Citation List

### Patent Literature

Patent Literature 1: Japanese Patent Application Laid-Open Publication No. 2023-105571

### SUMMARY

An object of the present disclosure is to display content on a more appropriate display.

One aspect of the present disclosure is directed to an in-vehicle system including a plurality of displays having a first display and a second display, and an information processing apparatus configured to output information via the plurality of displays,
the information processing apparatus including a controller configured to execute:
determining, based on a detection value of a sensor, that a vehicle is stopped;
outputting a command to display first content on the first display while the vehicle is stopped;
determining, based on the detection value of the sensor, that the vehicle has started driving; and
outputting a command to display the first content on the second display in response to the start of driving of the vehicle.

Another aspect of the present disclosure is directed to an information processing apparatus configured to control a plurality of displays having a first display and a second display,
the information processing apparatus including a controller configured to execute outputting, in response to the start of driving of a vehicle, information to display, on the second display, first content displayed on the first display while the vehicle is stopped.

A further aspect of the present disclosure is directed to an in-vehicle system including a plurality of displays having a first display and a second display, and an information processing apparatus configured to output information via the plurality of displays,
the information processing apparatus including a controller configured to execute outputting, in response to the start of driving of a vehicle, information to display, on the second display, first content displayed on the first display while the vehicle is stopped.

In addition, other aspects of the present disclosure are directed to a vehicle equipped with the above-described in-vehicle system, an information processing method to be executed by the above-described information processing apparatus, a program for causing a computer to execute the information processing method, and a computer readable storage medium storing the program in a non-transitory manner.

According to the present disclosure, it is possible to display content on a more appropriate display.

### BRIEF DESCRIPTION OF THE DRAWINGS

FIG. 1 is a view illustrating a passenger compartment of a vehicle;
FIG. 2 is an enlarged view of surroundings of a steering wheel;
FIG. 3 is a diagram schematically illustrating an example of a hardware configuration of the vehicle;
FIG. 4 is a diagram illustrating an example of a functional configuration of an ECU;
FIG. 5 is a diagram illustrating an example of screens displayed on an inner display and a center display, respectively;
FIG. 6 is a diagram illustrating another example of screens displayed on the inner display and the center display, respectively;
FIG. 7 is a view illustrating an example of screens displayed on a meter display and the inner display, respectively;
FIG. 8 is a flowchart of a process of moving content in response to a user instruction according to a first embodiment; and
FIG. 9 is a flowchart of a process of returning content according to the first embodiment.

### DESCRIPTION OF THE EMBODIMENTS

In recent years, as automobiles have become more sophisticated, the displays used to provide information are becoming larger, or the number of displays is increasing. For example, a method has been proposed in which a large-sized touch panel display is disposed between a driver's seat and a front passenger seat in a front portion of a vehicle compartment, to collectively perform vehicle-related operations and information provision. However, in such a method, the line of sight of the driver moves significantly when operating the components included in the vehicle or checking output information. For the driving safety of the vehicle, it is preferable to minimize the movement of the driver's line of sight.

On the other hand, even if a display is disposed at a position where the driver does not need to move his or her line of sight significantly, the information that the driver can obtain may be limited in a case where the area of the display is small. Therefore, in a case where a plurality of displays are provided, for example, it is conceivable to display content on a first display having a large area. In this case, while the vehicle is stopped, the driver may move the content displayed on a second display to the first display, for example, by flicking the content. However, once the vehicle starts driving, it may be inappropriate to keep the content displayed on the first display. For example, the movement of the driver's line of sight may be larger on the first display than on the second display.

In contrast, an information processing apparatus, which is one aspect of the present disclosure, is an information processing apparatus that controls a plurality of displays including a first display and a second display, and is equipped with a controller configured to execute outputting, in response to the start of driving of the vehicle, information to display, on the second display, first content that has been displayed on the first display while the vehicle is stopped.

The plurality of displays may have a pair of display units disposed at positions on both sides of a steering wheel. Also, the pair of display units may each be configured to allow touch operations using a touch panel. In addition, the plurality of displays may include a display having an instrument unit disposed in front of the steering wheel. Further, the plurality of displays may include a large-sized display disposed on the center side of the vehicle in the width direction of the vehicle.

Preferably, the pair of display units may be disposed at positions protruding in the front and rear direction of the vehicle more toward the rear thereof than the instrument unit, i.e., at positions closer to the driver. By providing the pair of display units at such positions, it is possible to arrange the touch panels in the vicinity of the portions of the steering wheel held by the driver. In other words, it is possible to minimize the time that the driver has to release his/her hands from the steering wheel during operation.

On the other hand, the display disposed on the center side of the vehicle and the display disposed in front of the steering wheel can have a larger display area than the pair of display units. Therefore, more information can be provided to the driver.

Here, even if the first content is displayed on the first display while the vehicle is stopped, it may be inappropriate to continue to display the first content on the first display while the vehicle is driving. In contrast, the first content can be displayed on the second display by outputting information to display the first content on the second display in response to the start of driving of the vehicle. Accordingly, the driver does not need to look at the first content displayed on the first display.

Note that the first display may be, for example, a display designated by the driver as a display for displaying the first content while the vehicle is stopped. In addition, the first display may be a display capable of displaying more information than the second display. Further, the first display may be a display that requires a greater movement of the driver's line of sight than the second display. The second display may be the display on which the first content was displayed before the vehicle stopped. The first content may be moved from the second display to the first display by a user's operation while the vehicle is stopped.

Moreover, the controller may be configured to further execute stopping the display of the first content on the first display in response to outputting the information to be displayed on the second display. By stopping the display of the first content on the first display with the start of driving, it is possible to prevent the driver from looking at the first display.

Further, the first display may include a touch panel, and the controller may be further configured not to accept an input to the touch panel of the first display, in response to outputting the information to be displayed on the second display. In this way, by not accepting operations on the touch panel, the driver does not operate the touch panel, thus making it possible to prevent the driver's attention from being distracted from driving.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

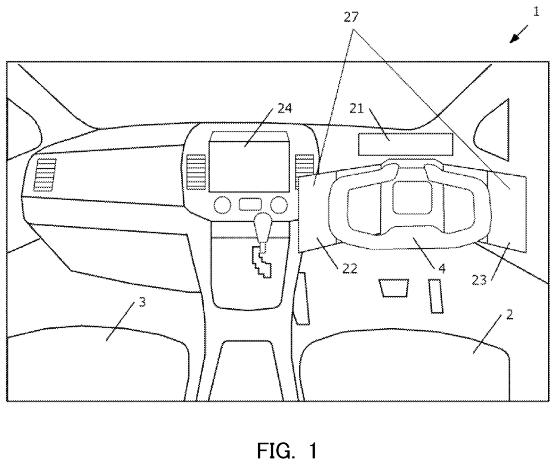

FIG. 1 is a view illustrating the passenger compartment of a vehicle 1. As illustrated in FIG. 1, a driver's seat 2 and a front passenger seat 3 are provided in the passenger compartment of the vehicle 1. Note that the vehicle 1 of the present embodiment is a right-hand drive vehicle, and the driver's seat 2 is provided on the right side of the vehicle 1. A steering wheel 4 is disposed on the forward side of the driver's seat 2. Note that the steering wheel 4 may be circular or may be U-shaped (a so-called irregular steering wheel), as illustrated. The steering wheel 4 is connected to a steering device of the vehicle 1 via a steering column. The steering column is covered by a column cover.

The passenger seat 3 is provided on the left side of the driver's seat 2, and a center display 24 is disposed on the front side of the vehicle at an intermediate position between the driver's seat 2 and the passenger seat 3. The center display 24 displays, for example, auxiliary information such as car navigation, or contents related to entertainment such as audio and television.

A meter display 21 is provided on the vehicle front side of the steering wheel 4. The meter display 21 is a full-screen display that is positioned in front of the driver's seat 2 to provide various types of information to the driver of the vehicle 1. The meter display 21 displays information necessary for driving the vehicle such as, for example, a speed of the vehicle (vehicle speed), an engine speed (if the vehicle 1 has an engine), a charge and discharge condition (if the vehicle 1 has a drive battery), and a travel distance. The meter display 21 is an example of a "meter unit" in the present disclosure.

A pair of display devices 27 are provided in a forward portion of the driver's seat 2 of the passenger compartment. The pair of display devices 27 includes touch panel displays respectively disposed at positions on both sides of the steering wheel 4. In the present embodiment, a display disposed closer to the inner side of the vehicle is referred to as an inner display 22, and a display disposed closer to the outer side of the vehicle is referred to as an outer display 23. The inner display 22 and the outer display 23 are connected to an instrument panel of the vehicle 1. Note that the inner display 22 is disposed closer to the outer side of the vehicle than the center display 24.

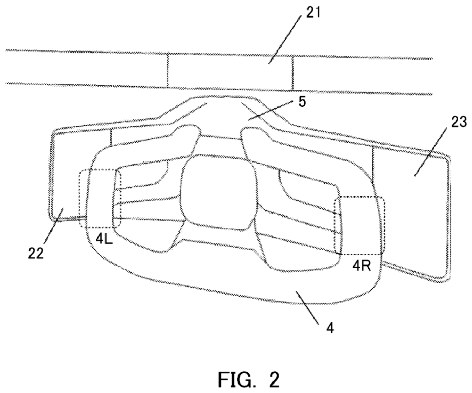

Referring to FIG. 2, the detailed structures of the inner display 22 and the outer display 23 will be described. FIG. 2 is an enlarged view of surroundings of the steering wheel 4. The inner display 22 and the outer display 23 are vertically long displays, and are connected to a support portion 5 which is a member supporting each display. The support portion 5 has a shape protruding in the left and right direction of the steering wheel 4. The outer display 23 is connected to the right end of the support portion 5 when facing the vehicle front side, and the inner display 22 is connected to the left end thereof when facing the vehicle front side. Accordingly, the display screens can be located in the vicinity of grip portions of the steering wheel 4.

Here, note that the above description is an example in the case where the vehicle 1 is a right-hand drive vehicle, and in the case where the vehicle 1 is a left-hand drive vehicle, the left and right sides are reversed. That is, the outer display 23 is connected to the left end of the support portion 5 when facing the front side of the vehicle, and the inner display 22 is connected to the right end portion of the support portion 5 when facing the front side of the vehicle.

The support portion 5 may also serve as a column cover that covers the steering column. The support portion 5 extends in the left and right direction (vehicle width direction) from its portion through which the steering column passes, and each of its left and right portions extends toward the vehicle rear side and is bent in its middle so that the angle thereof with respect to the left and right direction of the steering wheel becomes smaller.

Further, the inner display 22 and the outer display 23 are angled with respect to the left and right direction of the steering wheel 4, and are each disposed so as to be inclined toward the steering wheel side. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

An area 4R indicated by a broken line in FIG. 2 is a portion (grip portion) where the steering wheel 4 is gripped or held by the right hand, and an area 4L indicated by a broken line in FIG. 2 is a portion (grip portion) where the steering wheel 4 is gripped or held by the left hand. The inner display 22 and the outer display 23 are disposed closer to the vehicle front side than the grip portions of the steering wheel 4 in the front and rear direction of the vehicle 1. By forming the support portion 5 in the above-described shape, the positions of the inner display 22 and the outer display 23 in the vehicle front and rear direction can be brought closer to the grip portions of the steering wheel 4. Therefore, it is possible to further reduce the amount of hand movement when the driver performs a touch operation on the inner display 22 or the outer display 23 during driving.

The meter display 21, the inner display 22, the outer display 23, and the center display 24 are all displays each having a touch panel. Here, it is sufficient that at least the inner display 22 and the outer display 23 each have a touch panel. As a touch panel, for example, a touch panel of a pressure-sensitive type that detects pressure applied to the panel by the user, a touch panel of an electrostatic capacitance type that detects a change in electrostatic capacitance when the user presses the panel, or the like can be adopted. The displays are each, for example, an LCD (Liquid Crystal Display), EL (Electroluminescence) panel, or the like. Note that in the following, when a user touches a screen, it means that the user touches a touch panel.

The inner display 22 displays, for example, information related to the convenience of occupants of the vehicle 1. The information related to the convenience of the occupants of the vehicle 1 includes information for providing entertainment to the occupants of the vehicle 1. The information related to the convenience of the occupants of the vehicle 1 may include information related to the comfort of the occupants. The information about the comfort and convenience of the occupants includes, for example, information about switches, buttons, etc., for operating audio, navigation device, air conditioner, telephone, clock, voice assistant, etc., and information about the operation status of these devices.

The outer display 23 displays, for example, information about the control of the vehicle 1. The information about the control of the vehicle 1 includes information about the driving of the vehicle 1. Specifically, the information about the control of vehicle 1 includes, for example, information about switches, buttons, etc., for operating headlights, wipers, side mirrors, ADAS, drive mode, suspension, steering wheel position, and seat position, as well as information about the operation status of these devices. By displaying the information related to the control of the vehicle 1 on the outer display 23, it is possible to prevent passengers other than the driver from operating the information related to the control of the vehicle 1.

Here, note that the information to be displayed on the inner display 22 and the outer display 23 is not limited to the above. The inner display 22 may display information about the control of the vehicle 1, and the outer display 23 may display information about the convenience of the occupants of the vehicle 1. In addition, information to be displayed on the inner display 22 and the outer display 23 can be determined in an optional manner.

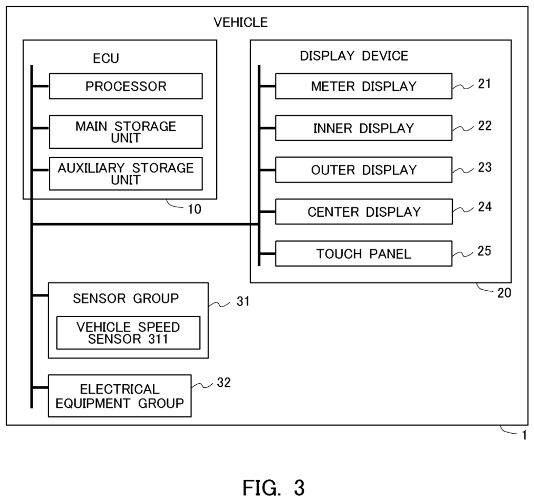

FIG. 3 is a diagram schematically illustrating an example of a hardware configuration of the vehicle 1. The vehicle 1 includes an ECU 10, a display device 20, a sensor group 31, and an electrical equipment group 32. The ECU 10 can be configured as a computer having a processor (CPU, GPU or the like), a main storage device (RAM, ROM, or the like), and an auxiliary storage device (EPROM, hard disk drive, removable medium, or the like). An operating system (OS), various programs, various tables, etc., are stored in the auxiliary storage device, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like. The display device 20, the sensor group 31, and the electrical equipment group 32 are connected to the ECU 10. The ECU 10 is an example of an information processing apparatus.

The display device 20 includes the meter display 21, the inner display 22, the outer display 23, the center display 24, and a touch panel 25. The touch panel 25 is a unit for detecting touch operations performed on the meter display 21, the inner display 22, the outer display 23, and the center display 24. The meter display 21, the inner display 22, the outer display 23, and the center display 24 are each provided with the touch panel 25, so that they can be operated by touch. The meter display 21, the inner display 22, the outer display 23, and the center display 24 are examples of a "first display" and a "second display".

The sensor group 31 is a set of a plurality of sensors for obtaining sensor data used in driving the vehicle 1. The sensors may obtain physical quantities or may obtain image data or the like. The sensor group 31 includes, for example, a sensor that detects the state of the vehicle 1, a sensor that detects the action of the driver, and the like. The sensor group 31 includes, for example, an illuminance sensor that detects the illuminance outside the vehicle 1, a raindrop sensor that detects raindrops, a vehicle speed sensor 311 that detects the speed of the vehicle 1, an acceleration sensor that detects the acceleration of the vehicle 1, an accelerator opening sensor that detects the position of an accelerator pedal, a brake sensor that detects the position of a brake pedal, a steering angle sensor that detects the angle of a steering wheel, an engine rotation speed sensor that detects the rotation speed of an engine, a water temperature sensor that detects the temperature of engine cooling water, an oil temperature sensor that detects the temperature of engine oil, an oil pressure sensor that detects the pressure of engine oil, a sensor that detects the pressure of intake air of the engine, a yaw rate sensor, a winker switch sensor (a sensor that detects the state of a direction indicator switch), a shift position sensor, a position information sensor (GPS sensor), a sensor that detects the temperature inside the vehicle, a sensor that detects the temperature outside the vehicle, a radar that measures the distance to an object, etc.

The electrical equipment group 32 is a collection of electrical equipment used in the vehicle 1. The electrical equipment group 32 includes, for example, an air conditioner, a suspension, a massage seat, a navigation device, headlights, wipers, an audio system, a telephone, side mirrors, and a voice assistant.

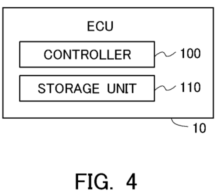

FIG. 4 is a diagram illustrating an example of a functional configuration of the ECU 10. The ECU10 includes a controller 100 and a storage unit 110 as functional components. The controller 100 is a functional component provided, for example, by a processor executing various programs stored in an auxiliary storage unit. The storage unit 110 is a means for storing information, and includes a main storage unit and the auxiliary storage unit.

The controller 100 receives a signal from the touch panel 25 and determines a user's input operation via the touch panel 25. Also, the controller 100 identifies the location touched by the user. The controller 100 identifies the content touched by the user according to the user's input operation (the location touched by the user). In addition, when the user touches the touch panel 25 and makes a finger movement associated with a flick, the controller 100 determines that a flick operation has been performed. Note that, in addition to the flick, the controller 100 may be able to determine input operations such as swipe, tap, pinch, double tap, long tap, multi-tap, etc. The relationship between the user's finger movements and the user's input operations is stored in the storage unit 110. Further, the controller 100 may identify the direction of movement of the content according to the direction of the flick operation, for example.

Moreover, the controller 100 outputs a command for displaying the content to the display device 20. The controller 100 generates an image corresponding to the content for each frame, generates a signal for displaying the image for each frame, and transmits this signal to the display device 20.

Further, the controller 100 controls the display device 20 so that the content moves in the direction in which the user has flicked. For example, when the user flicks the screen of the content displayed on the inner display 22 toward the center display 24, the controller 100 moves the content from the inner display 22 to the center display 24. At this time, the controller 100 may erase the content displayed on the inner display 22 and simultaneously display the content on the center display 24. After the content has been moved, the inner display 22 may display a home screen, menu screen, or a screen of other content, or may display text or graphics indicating that the content is being moved to the center display 24. As another example, nothing may be displayed on the inner display 22. Note that the controller 100 may accept the movement of the content to another display only while the vehicle 1 is stopped.

Then, when the vehicle 1 starts driving, the controller 100 returns the content that had been moved to the center display 24 to the original inner display 22. Thereafter, the center display 24 may display the content that was displayed before the content had been moved from the inner display 22.

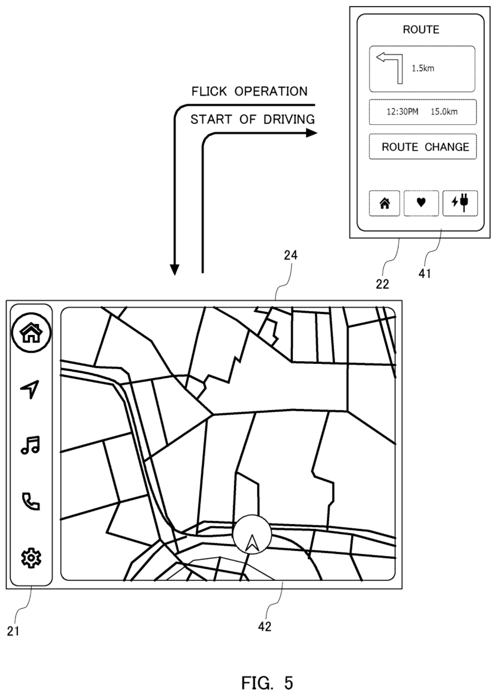

FIG. 5 is a diagram illustrating an example of screens displayed on the inner display 22 and the center display 24, respectively. The content shown in FIG. 5 is content related to the navigation device (hereinafter, also referred to as navigation content). While the vehicle 1 is driving, a screen 41 of the inner display 22 simply displays the distance to a position at which the next right or left turn is made and the direction of the turn (left in FIG. 5). Even if the driver wants to check a more detailed map, it may be difficult to use the inner display 22 because the area of the screen 41 is small. Therefore, when the driver flicks the screen 41 of the inner display 22 in the direction of the center display 24, the controller 100 displays the navigation content on a screen 42 of the center display 24. At this time, the center display 24 displays a map, and the position and route of the vehicle. Note that the controller 100 accepts such a flick operation only when the vehicle 1 is stopped.

In this way, the driver can check the detailed map on the center display 24 while the vehicle 1 is stopped. On the other hand, if the driver operates the center display 24 in a case where the vehicle 1 has started driving, it is necessary for the driver to move his or her line of sight significantly or stretch his or her hands, and there is a concern that driver's attention to driving may be distracted.

Therefore, in the present embodiment, in response to the start of driving of the vehicle 1, the controller 100 moves the navigation content from the center display 24 to the inner display 22. At this time, the controller 100 may stop the display of the navigation content on the screen 42 of the center display 24. In this case, content other than the navigation content may be displayed, or the screen 42 may be turned off. In addition, as another example, the controller 100 may cause the center display 24 to display the content that was displayed on the center display 24 before the navigation content was displayed. The information about the content displayed on the center display 24 before the navigation content is displayed is stored in the storage unit 110 by the controller 100. Also, as a further example, the controller 100 may be configured not to accept an input to the touch panel 25 of the center display 24 while the vehicle 1 is driving. That is, the controller 100 may prevent the driver from operating the navigation content displayed on the center display 24. At this time, the navigation content may be displayed on the center display 24.

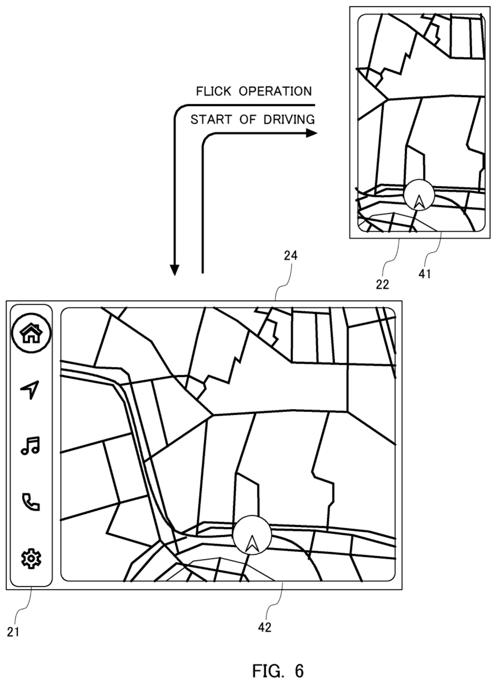

FIG. 6 is a diagram illustrating another example of screens displayed on the inner display 22 and the center display 24, respectively. In the example shown in FIG. 5, when the navigation content is displayed on the inner display 22, a simplified display is used, but in the example shown in FIG. 6, a map, the vehicle's position, and the route are also displayed on the inner display 22. In such a case, the display area of the inner display 22 is relatively small, and hence it is difficult for the driver to check the surrounding roads and the like. On the other hand, if the screen 41 of the inner display 22 is flicked to display the map on the center display 24, the driver can check the detailed map. In addition, if the navigation content is displayed on the inner display 22 as the vehicle 1 starts to run, it is possible to prevent the driver's attention from being distracted from driving. Also, the contents (details) of operations performed on the center display 24 can be continuously checked on the inner display 22.

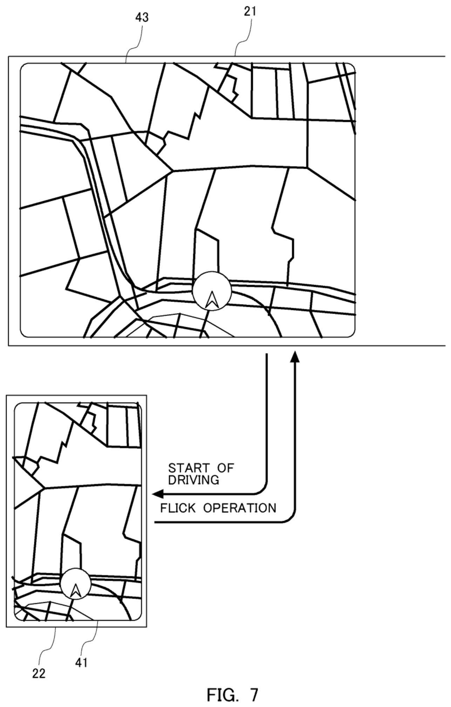

FIG. 7 is a view illustrating an example of screens displayed on the meter display 21 and the inner display 22, respectively. The content shown in FIG. 7 is navigation content. When the driver flicks the navigation content displayed on the screen 41 of the inner display 22 toward the meter display 21 while the vehicle 1 is driving, the controller 100 displays the navigation content on a screen 43 of the meter display 21. At this time, the meter display 21 displays the map, and the position and route of the vehicle. Note that the controller 100 accepts such a flick operation only when the vehicle 1 is stopped.

Then, when the vehicle 1 starts driving, the controller 100 displays the navigation content on the inner display 22 and also displays, for example, the speed of the vehicle 1 or the engine rotation speed on the meter display 21 instead of the navigation content. The speed of the vehicle 1 does not need to be checked by the driver when the vehicle 1 is stopped. Therefore, there is no problem even if the navigation content is displayed on the meter display 21. On the other hand, when the vehicle 1 starts driving, the driver needs to check the speed of the vehicle 1. Therefore, while the vehicle 1 is driving, the speed of the vehicle 1 is displayed on the meter display 21, which requires a small movement of the driver's line of sight. Also, the contents (details) of operations performed on the meter display 21 can be continuously checked on the inner display 22.

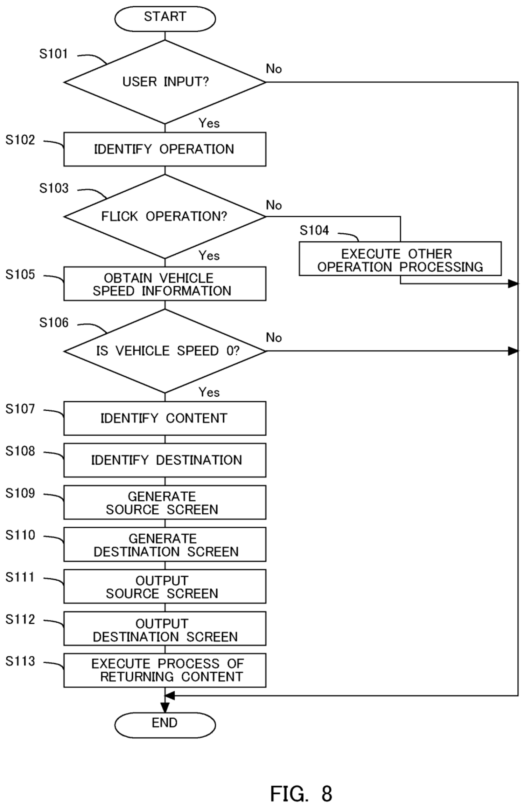

FIG. 8 is a flowchart of a process of moving content in response to a user instruction according to a first embodiment. The processing illustrated in FIG. 8 is executed in the ECU 10 at predetermined time intervals. Note that in the following, an example in which content is moved from the inner display 22 to the center display 24 will be described.

In step S101, the controller 100 determines whether or not there is an input from the user on the touch panel 25. The controller 100 determines that there is an input from the user, for example, when detecting that the user has touched the screen, by a signal from the touch panel 25. For example, the controller 100 may determine whether or not the user has touched the inner display 22 or the outer display 23. If the controller 100 makes a positive determination in step S101, the processing proceeds to step S102, whereas if the controller 100 makes a negative determination in step S101, this routine ends.

In step S102, the controller 100 identifies what kind of operation the input from the user is. For example, the controller 100 identifies whether the input from the user is a flick, a swipe, a tap, a pinch, a double tap, a long tap, or a multi-tap. Note that the storage unit 110 stores information corresponding to each operation, such as the position on the screen where the user is touching the screen, the direction in which a user's finger moves on the screen, and the speed or acceleration at which the finger moves on the screen. The controller 100 determines which operation the input from the user corresponds to, based on the input from the user to the touch panel 25 and the information stored in the storage unit 110.

In step S103, the controller 100 determines whether or not the input from the user is a flick operation. That is, the controller 100 determines whether or not there is a request to move the content. If the controller 100 makes a positive determination in step S103, the processing proceeds to step S105, whereas when the controller 100 makes a negative determination, the processing proceeds to step S104. In step S104, the controller 100 executes processing corresponding to an operation other than the flick.

In step S105, the controller 100 obtains vehicle speed information. At this time, the controller 100 obtains a detection value of the vehicle speed sensor 311 included in the sensor group 31. Next, in step S106, the controller 100 determines whether or not the detected speed of the vehicle 1 is zero. That is, the controller 100 determines whether or not the vehicle 1 is stopped. If the controller 100 makes a positive determination in step S106, the processing proceeds to step S107, whereas if the controller 100 makes a negative determination in step S106, this routine ends. In this manner, the controller 100 does not accept the movement of the content while the vehicle 1 is driving.

In step S107, the controller 100 identifies the content that the user has flicked. The controller 100 identifies the content that the user has flicked, based on the position at which the user has flicked and the information about the content that is currently being displayed and that is stored in the storage unit 110.

In step S108, the controller 100 identifies the destination of movement of the content flicked by the user. The controller 100 identifies the direction in which the user has flicked, according to the operation identified in step S102. Then, the display (e.g., the center display 24) located in the direction in which the user has flicked is identified. The positional relationship between the displays is stored in the storage unit 110. The controller 100 identifies a destination display to be moved to (e.g., the center display 24), based on the display flicked by the user (e.g., the inner display 22), the direction in which the user flicked (e.g., the left direction), and the positional relationship of each display stored in the storage unit 110.

In step S109, the controller 100 generates a screen of the source display (e.g., the inner display 22) from which the movement originates. At this time, the controller 100 generates a screen after the content has been moved. The controller 100 may generate, for example, a screen on which a text "CONTENT MOVING" is displayed, or may generate a screen filled with black. In addition, as another example, the controller 100 may generate a command to turn off the screen of the source display (e.g., the inner display 22).

In step S110, the controller 100 generates a screen of the destination display (e.g., the center display 24). At this time, the controller 100 generates a screen after the content has been moved. Note that the screen displayed on the source display (e.g., the inner display 22) before the content is moved and the screen displayed on the destination display (e.g., the center display 24) after the content is moved do not have to be the same. When the content is moved from the source to the destination, the content may be displayed larger, or may be changed to a more informative screen as the screen becomes larger. For example, a screen for each content corresponding to each display may be stored in the storage unit 110. In addition, the controller 100 may store in the storage unit 110 information about the content that was displayed on the destination display (e.g., the center display 24) before the content was moved.

In step S111, the controller 100 outputs information about the screen to the source display (e.g., the inner display 22). At this time, the controller 100 may transmit a command to display the screen generated in step S109 to the source display (e.g., the inner display 22). In step S112, the controller 100 outputs information about the screen to the destination display (e.g., the center display 24). At this time, the controller 100 may transmit a command to display the screen generated in step S110 to the destination display (e.g., the center display 24). In step S113, the controller 100 executes a process of returning content, which will be described later.

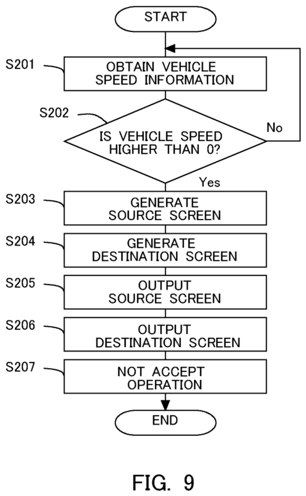

FIG. 9 is a flowchart of a process of returning content according to the first embodiment. The routine illustrated in FIG. 9 is executed by the controller 100 in step S113 described above. In step S201, the controller 100 obtains vehicle speed information in the same manner as in step S105. In step S202, the controller 100 determines whether or not the detected speed of the vehicle 1 is higher than zero. That is, the controller 100 determines whether or not the vehicle 1 has started driving. If the controller 100 makes a positive determination in step S202, the processing proceeds to step S203, whereas if the controller 100 makes a negative determination, the processing returns to step S201.

In step S203, the controller 100 generates a screen of the source display (e.g., the inner display 22). At this time, the controller 100 generates a screen after the content is returned to the source display (e.g., the inner display 22). In this case, the controller 100 may display the content in the manner it was displayed on the source display (e.g., the inner display 22) before the driver performed the flick operation.

In step S204, the controller 100 generates a screen of the destination display (e.g., the center display 24). At this time, the controller 100 generates a screen of the destination display (e.g., the center display 24) after the content is returned to the source display (e.g., the inner display 22). The controller 100 may not display the content identified in step S107 on the destination display (e.g., the center display 24). That is, the controller 100 may stop displaying the content. Alternatively, the controller 100 may generate a screen corresponding to the content displayed on the destination display (e.g., the center display 24) immediately before the user flicked the content. This content is obtained from the information about the content that was stored in the storage unit 110 by the controller 100 in step S110 described above.

In step S205, the controller 100 outputs information about the screen to the source display (e.g., the inner display 22). At this time, the controller 100 may transmit a command to display the screen generated in step S203 to the source display (e.g., the inner display 22). In step S206, the controller 100 outputs information about the screen to the destination display (e.g., the center display 24). At this time, the controller 100 may transmit a command to display the screen generated in step S204 to the destination display (e.g., the center display 24).

In addition, in step S207, the controller 100 stops accepting operations on the destination display (e.g., the center display 24) while the vehicle 1 is driving. Here, the controller 100 can also generate a screen to display the content identified in step S107 on the destination display (e.g., the center display 24) in step S204. In this case, if the driver is allowed to operate the destination display (e.g., the center display 24), the driver's attention may be distracted from driving. On the other hand, if the controller 100 does not accept operations on the destination display (e.g., the center display 24) during the driving of the vehicle 1 (i.e., does not accept an input to the touch panel 25), the driver will not operate the destination display (e.g., the center display 24). Note that the processing of step S207 may be executed only if, in step S204, the controller 100 generates a screen to display the content identified in step S107 on the destination display (e.g., the center display 24). Also, the step S207 can be omitted. When the processing of step S207 is completed, the routine illustrated in FIG. 9 ends, and the routine illustrated in FIG. 8 also ends.

Note that, in the flowcharts illustrated in FIG. 8 and FIG. 9, an example has been described in which content is moved from the inner display 22 to the center display 24, but the present disclosure is not limited to this. For example, the same can be applied to the movement of content from the inner display 22 to the meter display 21 or the outer display 23, the movement of content from the meter display 21 to the inner display 22, the outer display 23, or the center display 24, the movement of content from the outer display 23 to the meter display 21, the inner display 22, or the center display 24, and the movement of content from the center display 24 to the meter display 21, the inner display 22, or the outer display 23.

As described above, according to the present embodiment, after content is moved to another display while the vehicle 1 is stopped, the content can be automatically returned to the original display with the start of driving of the vehicle 1 as a trigger. Therefore, the content can be returned to its appropriate position without any operation by the driver. As a result, it is possible to prevent the driver's attention from being distracted from driving.

### <Other Embodiments>

The above-described embodiment is merely an example, but the present disclosure can be implemented with appropriate modifications without departing from the spirit thereof. The processing and/or means (devices, units, etc.) described in the present disclosure can be freely combined and implemented as long as no technical contradiction occurs. In addition, the processing described as being performed by one device or unit may be shared and performed by a plurality of devices or units. Alternatively, the processing described as being performed by different devices or units may be performed by a single device or unit. In a computer system, it is possible to flexibly change the hardware configuration that can achieve each function of the computer system.

In the above embodiment, an example has been described in which the ECU 10 of the vehicle 1 functions as an information processing apparatus, but the present disclosure is not limited to this. For example, a user's mobile terminal or an external server may function as an information processing apparatus.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An in-vehicle system comprising a plurality of displays (21, 22, 23, 24) having a first display (21, 24) and a second display (22, 23), and an information processing apparatus (10) configured to output information via the plurality of displays (21, 22, 23, 24),
the information processing apparatus (10) comprising a controller (100) configured to execute:
determining (S106), based on a detection value of a sensor (31), that a vehicle (1) is stopped;
outputting (S112) a command to display first content on the first display (21, 24) while the vehicle (1) is stopped;
determining (S202), based on the detection value of the sensor (31), that the vehicle (1) has started driving; and
outputting (S206) a command to display the first content on the second display (22, 23) in response to the start of driving of the vehicle (1).

2. An information processing apparatus (10) for controlling a plurality of displays (21, 22, 23, 24) including a first display (21, 24) and a second display (22, 23),
the information processing apparatus (10) comprising a controller (100) configured to execute outputting (S206), in response to the start of driving of a vehicle (1), information to display, on the second display (22, 23), first content displayed on the first display (21, 24) while the vehicle (1) is stopped.

3. The information processing apparatus (10) according to claim 2, wherein
the controller (100) is configured to further execute stopping the display of the first content on the first display (21, 24) in response to outputting the information to be displayed on the second display (22, 23).

4. The information processing apparatus (10) according to claim 2 or claim 3, wherein
the first display (21, 24) comprises a touch panel (25); and
the controller (100) is further configured not to accept (S207) an input to the touch panel (25) of the first display (21, 24) in response to outputting the information to be displayed on the second display (22, 23).

5. The information processing apparatus (10) according to any of claims 2 to 4, wherein
the controller (100) outputs (S112) a command to display, on the first display (21, 24), the first content displayed on the second display (22, 23) when the vehicle (1) is stopped, in response to an input from a user while the vehicle (1) is stopped.

6. The information processing apparatus (10) according to any of claims 2 to 5, wherein
the second display (22, 23) includes either one of a pair of display units (27) that are provided in a forward portion of a driver's seat (2) in a passenger compartment, are disposed at positions on both sides of a steering wheel (4) while protruding rearward of a meter display (21) disposed in front of the steering wheel (4), and have touch panels (25); and
the first display (21, 24) is either one of a center display (24), which is provided closer to a center of the vehicle (1) in a width direction of the vehicle (1) than the pair of display units (27), and the meter display (21).

7. An in-vehicle system comprising a plurality of displays (21, 22, 23, 24) having a first display (21, 24) and a second display (22, 23), and an information processing apparatus (10) configured to output information via the plurality of displays (21, 22, 23, 24),
the information processing apparatus (10) comprising a controller (100) configured to execute outputting (S206), in response to the start of driving of a vehicle (1), information to display, on the second display (22, 23), first content displayed on the first display (21, 24) while the vehicle (1) is stopped.

8. The in-vehicle system according to claim 7, wherein
the controller (100) is configured to further execute stopping the display of the first content on the first display (21, 24) in response to outputting the information to be displayed on the second display (22, 23).

9. The in-vehicle system according to claim 7 or claim 8, wherein
the first display (21, 24) comprises a touch panel (25); and
the controller (100) is further configured not to accept (S207) an input to the touch panel (25) of the first display (21, 24) in response to outputting the information to be displayed on the second display (22, 23).

10. The in-vehicle system according to any of claims 7 to 9, wherein
the controller (100) outputs (S112) a command to display, on the first display (21, 24), the first content displayed on the second display (22, 23) when the vehicle (1) is stopped, in response to an input from a user while the vehicle (1) is stopped.

11. The in-vehicle system according to any of claims 7 to 10, wherein
the second display (22, 23) includes either one of a pair of display units (27) that are provided in a forward portion of a driver's seat (2) in a passenger compartment, are disposed at positions on both sides of a steering wheel (4) while protruding rearward of a meter display (21) disposed in front of the steering wheel (4), and have touch panels (25); and
the first display (21, 24) is either one of a center display (24), which is provided closer to a center of the vehicle (1) in a width direction of the vehicle (1) than the pair of display units (27), and the meter display (21).
